(19) Europäisches Patentamt
European Patent Office
Office européen des brevets

(11) EP 0 984 049 B1

(12) **EUROPEAN PATENT SPECIFICATION**

(45) Date of publication and mention of the grant of the patent:
**10.08.2005 Bulletin 2005/32**

(51) Int Cl.[7]: **C09G 1/02**

(21) Application number: **98309812.0**

(22) Date of filing: **30.11.1998**

(54) **Chemical mechanical abrasive composition for use in semiconductor processing**

Chemische-mechanische Schleifzusammensetzung für Halbleiterverarbeitung

Composition abrasive chimic-mécanique pour le traitement de semi-conducteurs

(84) Designated Contracting States:
**CH DE FR LI NL**

(30) Priority: **31.08.1998 CN 98117452**

(43) Date of publication of application:
**08.03.2000 Bulletin 2000/10**

(73) Proprietor: **Epoch Material Co., Ltd.**
**Kaohsiung County 820 (TW)**

(72) Inventors:
- **Lee, Tsung-ho**
**Ping Tong Hsien (TW)**
- **Yeh, Tsui-Ping**
**Kusan District, Kaohsung (TW)**

(74) Representative: **Woods, Geoffrey Corlett**
**J.A. KEMP & CO.**
**Gray's Inn**
**14 South Square**
**London WC1R 5JJ (GB)**

(56) References cited:
**EP-A- 0 325 232**
**EP-A- 0 831 136**
**EP-A- 0 844 290**
**EP-A- 0 846 742**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 984 049 B1

Printed by Jouve, 75001 PARIS (FR)

## Description

The invention pertains to chemical mechanical abrasive compositions. The chemical mechanical abrasive compositions of the invention are useful in polishing the surface of a semiconductor wafer.

In the semiconductor industry, semiconductor wafer surface polishing is a universally used technique, because it enhances the smoothness on the semiconductor wafer and a dielectric layer and facilitates the production of wire circuits. In general, the polishing method for producing a wire circuit comprises mounting a semiconductor wafer on a spinning platen equipped with an abrasive head and applying an abrasive slurry comprising abrasive particles and an oxidant to the surface of the wafer to enhance the abrasive efficacy.

U.S. Pat. No. 5,225,034 disposes a chemical mechanical abrasive slurry which comprises $AgNO_3$, solid abrasive particles, and an oxidant selected from $H_2O_2$, HOCl, KOCl, $KMgO_4$, or $CH_3COOOH$. The slurry is used for polishing a copper layer on a semiconductor wafer so as to produce copper wire on the wafer.

U.S. Pat. No. 5,209,816 discloses a method for polishing an Al- or Ti- containing metal layer with a chemical mechanical abrasive slurry. The abrasive slurry contains, in addition to the solid abrasive material, about 0 1-20% by volume of $H_3PO_4$ and about 1-30% by volume of $H_2O_2$.

U.S. Pat. No. 4,959,113 discloses a method of using an aqueous abrasive composition for polishing metal surfaces. The aqueous abrasive composition comprises water, an abrasive. e.g. $CeO_2$, $Al_2O_3$, $ZrO_2$, $TiO_2$, $SiO_2$, SiC, $SnO_2$, or TiC, and a salt including a metal cation of Group IIA, IIIA, IVA or IVB and an anion of chloride, bromide, iodide, nitrate, sulfate, phosphate or perchlorate. This patent also discloses the use of hydrochloric acid, nitric acid, phosphoric acid or nitric acid to adjust the pH of the abrasive composition to be in the range of 1 to 6.

US Pat. No. 5,391,258 discloses an abrasive composition for polishing silicon, silica or silicate composite. The abrasive composition comprises, in addition to abrasive particles, hydrogen peroxide and potassium hydrogen phthalate.

US Pat. No. 5,114,437 discloses a polishing composition for an aluminum substrate comprising an alumina polishing agent having an average particle size of 0.2 to 5 µm, and a polishing accelerator selected from the group consisting of chromium(III) nitrate, lanthanum nitrate, ammonium cerium(III) nitrate, and neodymium nitrate.

US Pat. No. 5,084,071 discloses a chemical mechanical polishing slurry for an electronic component substrate. The polishing slurry comprises abrasive particles (e.g. $SiO_2$, $CeO_2$, SiC. $Si_3N_4$, or $Fe_2O_3$ particles) containing no more than 1 percent weight of alumina, a transition metal chelated salt (e.g. ammonium iron EDTA) for use as a polishing accelerator, and a solvent for said salt.

US Pat. No. 5,480,476 discusses the effect of Ce4+ and Zr4+ cations on the polishing rate of $SiO_2$-based abrasives.

US Pat. No. 5,366,542 discloses a polishing composition comprising alumina abrasive particles, and a chelating agent selected from the group consisting of polyaminocarboxylic acid (e.g. EDTA) and sodium and potassium salts thereof The composition may further comprise beohmit or an aluminum salt.

US Pat. No. 5,340,370 discloses a chemical mechanical polishing slurry for tungsten or tungsten nitride film, which comprises an oxidizing agent such as potassium ferricyanide, an abrasive, and water, and has a pH between 2 and 4.

US Pat. No. 5,516,346 discloses a slurry for chemical mechanically polishing a titanium film, said slurry comprising potassium fluoride in a concentration sufficient to complex said titanium film, and an abrasive, such as silica, and having a pH less than eight.

WO 96/16436 discloses a chemical mechanical polishing slurry which comprises abrasive particles having a median particle diameter less than 0.400 microns, a ferric salt oxidant, and a suspension agent of an aqueous surfactant which is a mixture of propyleneglycol and methylparaben.

US Pat. No. 5,527,423 discloses a chemical mechanical slurry for polishing a metal layer, which comprises an oxidizing component such as iron nitrate, an aluminum particle comprising at least 50% gamma phase, and nonionic surfactants such as polyalkyl siloxanes, or polyoxyalkylene ethers.

EP-A-0846742 discloses a chemical mechanical polishing slurry for copper substrates. EP-A-0831136 discloses a multi-oxidizer slurry for chemical mechanical polishing.

It is known in the art that if the abrasive composition viscosity is too high to be flowable, the abrasive particles will deposit on the abrasive pad and be difficult to remove, possibly scratching the wafer surfaces. Although US Pat. No. 5,527,423 discloses the use of nonionic surfactants, such as polyalkyl siloxanes or polyoxyalkylene ethers, these surfactants cannot effectively reduce the viscosity of the abrasive composition.

Accordingly, need still exists for abrasive compositions which are more economical and have high polishing performance, and for chemical mechanical abrasive compositions with reduced viscosity.

The present invention provides a chemical mechanical abrasive composition for semiconductor processing, which comprises 70-95% by weight of an aqueous medium, 1-25% by weight of an abrasive, and 0.1-20% by weight of an abrasion accelerator, wherein the abrasion accelerator comprises an amido group-containing compound in combination with a nitrate salt. The chemical mechanical abrasive composition of the present invention can further comprise an anionic surfactant, such as polycarboxylic acid or polyacrylic acid

copolymer, or the salts thereof, to reduce the viscosity of the abrasive composition.

The present invention provides a chemical mechanical abrasive composition for semiconductor processing, which comprises 70-95% by weight of an aqueous medium, 1-25% by weight of, preferably 3-10% by weight of, and more preferably 4-6% by weight of, an abrasive, and 0. 1-20% by weight of, preferably 1-10% by weight of, and more preferably 2-5% by weight of, an abrasion accelerator, wherein the abrasion accelerator comprise an amido group-containing compound and a nitrate salt.

The chemical mechanical abrasive composition of the present invention can further comprise 1-15% by weight of, and preferably 4-8% by weight of, an oxidant.

According to the present invention, the abrasive used in the abrasive composition can be any commercially available abrasive agent in particle form, such as $SiO_2$, $Al_2O_3$, $ZrO_2$, $CeO_2$, SiC, $Fe_2O_3$, $TiO_2$, $Si_3N_4$, or any mixture thereof.

The oxidant used in the abrasive composition, according to the present invention, can be any suitable commercial oxidant, such as peroxides, chlorates, chlorites, perchlorates, bromates, bromites, perbromate, nitrates, or the mixture thereof.

A monocarboxy group containing compound used optionally in the abrasive composition according to the present invention is selected from:

(a) the monocarboxy group compound of the formula:

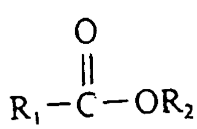

in which, $R_1$ is hydrogen, $C_1$-$C_6$ alkyl or $C_1$-$C_6$ hydroxyalkyl; and $R_2$ is hydrogen, ammonium, or alkali metal ions and preferably, potassium ion;

or

(b) Aminoacid compounds.

Examples of the above compound (a) include formic acid, acetic acid, propionic acid, butyric acid, valeric acid, hexanoic acid, glycolic acid, lactic acid and the salts thereof. Examples of the above aminoacid compounds (b) include glycine, sarcosine, dimethylglycine, alanine and the salts thereof.

Examples of the amido group-containing compound used in the present invention as an abrasion accelerator include formamide, acetamide, propionamide, N-methylformamide, N-methylacetamide, urea, methylurea, ethylurea, dimethylurea and diethylurea.

The nitrate used in the present invention is the alkali metal salt or ammonium salt well known to a person with ordinary skill in the art.

The abrasion accelerator used in the present invention comprises common chemicals which are less dangerous and would not cause a serious detriment to the health of the workers in semiconductor processing and to the environment.

It is believed that the viscosity of an abrasive composition will increase due to the formation of hydrogen bonds between the group Si-OH or Al-OH on the surfaces of the abrasive particles and the water molecule. Therefore, the viscosity of the abrasive composition could be reduced if a polymer is applied effectively and a film is formed on the surfaces of the abrasive particles so as to reduce the formation of hydrogen bonds between the abrasive particles and the water molecule.

Accordingly, according to another aspect of the present invention, there is provided a chemical mechanical abrasive composition with reduced viscosity. The said composition comprises 70-95% by weight of an aqueous medium. 1-25% bv weight of an abrasive. 0.1-20% by weight of an abrasion accelerator, wherein the abrasion accelerator comprises an amido group-containing compound in combination with a nitrate salt, and 0.01-1% by weight, and preferably 0.1-0.5% by weight of an anionic surfactant serving as a viscosity-reducing agent. The anionic surfactant which is suitable for the abrasive composition of the present invention is selected from polycarboxylic, the salts thereof; polyacrylic copolymer, the salts thereof; or a mixture containing two or more of these polymers and their salts.

According to the present invention, the above chemical mechanical abrasive composition may further comprise 1-15% by weight, and preferably 4-8% by weight, of an oxidant. According to a preferred embodiment of the present invention, the chemical mechanical abrasive composition of the present invention comprises at least 70% by weight of an aqueous medium, 4-6% by weight of an abrasive, 2-4% by weight of an abrasion accelerator, 4-8% by weight of an oxidant, and 0.1-0.5% by weight of a viscosity-reducing agent.

The abrasive composition of the present invention may use water as a medium. In the preparation of the abrasive composition, water, and preferably deionized water, may be used to make the composition into a slurry.

The abrasive composition of the present invention may further comprise those ingredients which are conventionally used in chemical mechanical abrasive art, only if they will not cause an adverse effect on the abrasive composition of the present invention. For example, when used m a copper production process, the abrasive composmon of the present invention may include benzotriazole and/or its derivatives to inhibit rapid copper corrosion.

The abrasive composition of the present invention can be prepared by conventional methods. For example, an abrasive slurry can be prepared by first adding an abrasive to water and continuously stirring the mixture with a high shear force until the abrasive particles are completely suspended in the water. Thereafter, more water is added to the slurry such that the abrasive particles in the slurry are present in the desired solid content. According to the present invention, the solid content of the slurry is in the range from 1 to 25% by weight, and preferably 3 to 10% by weight. The additives described above are then introduced into the resultant slurry and the pH of the slurry is adjusted by, for example, ammonium hydroxide, to be in the desired range. For example, when the metal film to be polished is W film, the pH may be adjusted to be in the range of 1.5 to 2.5, and preferably in the range of 1.8 to 2.3; for Al film, the pH may be adjusted to be in the range of 3.0 to 4.5, and preferably in the range of 3.8 to 4.2; and for Cu film, the pH may be adjusted to be in the range of 3.0 to 4.5 or 6.0 to 7.0, and preferably in the range of 3.8 to 4.0 or 6.2 to 6.6. Finally, the resultant slurry is filtered to obtain the abrasive composition of the present invention. The preparation of the abrasive composition of the present invention can be carried out at any suitable temperature, and preferably at a temperature ranging from 20 to 40°C

The present invention will be further described by, but not limited to, the following examples. Any modifications or changes with reference to the present invention which can be accomplished by persons skilled in the art will be covered in the domain of the present invention.

**Examples**

Example 1

5 Kg alumina particles (produced by Sumitomo Chemical Company, Model No. AKP-G008) was added to 20 Kg deionized water. The mixture was -agitated continuously with a stirrer having a high shear force until the alumina particles were completely suspended in the water and a slurry was formed. 24.5 Kg deionized water was then added to dilute the slurry such that the solid content of the slurry was slightly higher than 10% by weight. Thereafter, 2.78 Kg ammonium persulfate and 2.78 Kg formamide were added to the slurry. After the slurry had been agitated for 30 minutes, the slurry was adjusted to have a pH of about 3.8. The slurry was then filtered to obtain the chemical mechanical abrasive composition of the present invention having a solid content of about 9% by weight. The result of abrasion test of the resultant compositions are listed below in Table 1.

Example 2

The preparation steps of Example 1 were repeated except that the formamide was replaced by 3.33 Kg propionic acid. The abrasion test results of the resultant compositions are listed below in Table 1.

Abrasion Test

A. Apparatus: IPEC/Westech 472

B. Conditions: Pressure 34.5.$10^3$ Pa (5 psi) Temperature: 25°C Spindle speed: 50 rpm Platen speed: 55 rpm Pad type: Rodel IC 1400 Slurry flow: 150 ml/min

C. Wafer: Al film: commercially available from Silicon Valley Microelectronics. Inc., which is obtained by CVD-depositing a film having the thickness of 0.85 ± 5% micrometers on a 6 inches silicon wafer; and has the purity of: Al 98.5%, Si 1%, and Cu 0.5%

D. Slurry: Slurrys of Examples 1 and 2, which have the same volume and are aqueous solutions containing 5 wt% $H_2O_2$, and are tested after having been uniformly agitated for I 5 minutes

Abrasion Test Procedure

Both before and after abrasion test, the thickness of the wafer to be polished should be measured by a thickness measuring means. The sheet resistivity of the metal film is measured by a 4-point probe. The thickness of the film is determined by the following formula:

$$T \times R = \text{resistivity coefficient}$$

wherein T represents film thickness (A), and R represents sheet resistivity ($\Omega/cm^2$). For various metal films, the resistivity coefficient will be a constant

The present invention used Model RS 75 of KLA-Tencor Company to determine the metal film thickness.

The film thickness of an oxide can be directly determined by the optical theory well known persons skilled in the art. The present invention used Model SM 300 of KLA-Tencor Company to determine the film thickness of an oxide.

The polishing rate is determined as follows:

A metal film thickness $T_1$ is first determined by the apparatus of Model RS75. The film is polished by an exemplified slurry under the above-mentioned conditions for 1 minute. Thereafter, the platen and the wafer are cleaned by the apparatus of Evergreen Model 10X produced by Solid State Equipment Corporation. After spray-drying the wafer, a metal film thickness $T_2$ is measured by the apparatus of Model RS75. The polishing rate of the exemplified slurry for the metal film is represented by $T_1$ - $T_2$.

The test data are listed below in Table 1:

Table 1

| No. of Example | Al removal rate (Å/min) |
|---|---|
| Example 1* | 3854 |
| Example 2* | 4525 |

* not according to the invention

Example 3

An abrasive slurry having the following formula was prepared in a manner similar to that described in Example 1:

Abrasive particles. Silica (Aerosil 90 of Degussa)
Solid content of the slurry: 6 wt%
Ammonium nitrate: 3 wt%
Urea: 3 wt%

The slurry was adjusted with $HNO_3$ and $NH_4OH$ to have a pH of about 2.2.

The abrasion test result of the resultant abrasive composition is shown below in Table 2.

Comparative Example 1

An abrasive slurry having the following formula was prepared in a manner similar to that described in Example 3:

Abrasive particles: Silica (Aerosil 90 of Degussa)
Solid content of the slurry: 6 wt%
Ammonium nitrate: 3 wt%
Oxalic acid: 3 wt%

The slurry was adjusted with $HNO_3$ and $NH_4OH$ to have a pH of about 2.2.

The abrasion test result of the resultant abrasive composition is shown below in Table 2.

Abrasion Test

A. Apparatus: IPEC/Westech 472
B. Conditions: Down force 51.7. $10^3$ Pa (7.5 psi)
Back pressure: 0 Pa (0 psi)
Temperature: 25°C
Platen speed: 50 rpm
Carrier speed: 55 rpm Pad type: Rodel IC 1400. K-GRV Slurry flow: 150 ml/min
C. Wafer: W film: commercially available from Silicon Valley Microelectronics, Inc., which is obtained by CVD-depositing a film having the thickness of 0.85 ± 5% micrometers on a 6 inches silicon wafer
D. Slurry: Slurrys of Example 3 and Comparative Example 1, which were mixed with 30 wt% $H_2O_2$ in the volume ratio of slurry to $H_2O_2$ of 5:l

The abrasion test procedures are substantially the same as described before. The resultant test data are listed below in Table 2.

Table 2

| No. of Example | W removal rate (Å/min) |
|---|---|
| Example 3 | 1548 |
| Comparative Example 1 | 617 |

In the process for producing IC copper circuits. Ta is most commonly used as a barrier metal film. Nevertheless, since Ta has a high chemical resistance, achieving effective polishing of Ta is usually difficult. It has been found that the abrasive composition of the present invention is able to provide excellent polishing efficacy for Ta. This polishing efficacy will be illustrated by the following examples.

Example 4

The same preparation steps of Example 1 were repeated except that 4.72 Kg alumina and 3.61 Kg ammonium persulfate were used and 2.50 Kg urea were substituted for formamide. The abrasion test results of the resultant compositions are listed below in Table 3.

Example 5

The same preparation steps of Example 4 were repeated except that 5.55 Kg silica (Aerosil 90, Degussa) was substituted for alumina and 4.44 Kg glycine was substituted for urea and 2.22 Kg ammonium persulfate was used. The abrasion test results of the resultant compositions are listed below in Table 3.

Example 6

The same preparation steps of Example 5 were repeated except that 2.78 Kg glycolic acid was substituted for glycine and ammonium persulfate. The abrasion test results of the resultant compositions are listed below in Table 3.

Example 7

The same preparation steps of Example 6 were repeated except that 1.65 Kg formic acid was substituted for glycolic acid. The abrasion test results of the resultant compositions are listed below in Table 3.

Example 8

The same preparation steps of Example 6 were repeated except that 2.78 Kg acetamide and 2.78 Kg ammonium nitrate were substituted for glycolic acid. The abrasion test results of the resultant compositions are listed below in Table 3.

Comparative Example 2

The same preparation steps of Example 4 were repeated except that 2.78 Kg citric acid was substituted for urea and 2.78 ammonium persulfate was used. The abrasion test results of the resultant compositions are listed below in Table 3.

Abrasion Test

A. Apparatus: IPEC/Westech 472
B. Conditions: Pressure 34.5. $10^3$ Pa (5 psi)
Temperature: 25°C
Spindle speed: 50 rpm
Platen speed: 55 rpm
Pad type: Rodel IC 1000K-GRV
Slurry flow: 150 ml/min
C. Wafer: Ta film: commercially available from Silicon Valley Microelectronics. Inc., which is obtained by CVD-depositing a film having the thickness of 0.5 ± 5% micrometers on a 6 inches silicon wafer
D. Slurry: Slurrys of Examples 3 and 4 and Comparative Example 2, which were prepared to be in the same volume of aqueous solutions containing 7 wt% potassium bromate, and were tested after having been uniformly agitated for 15 minutes; and Slurrys of Examples 5-7, which were prepared to be in the same volume of aqueous solutions containing 5 wt% $H_2O_2$, and were tested after having been uniformly agitated for 15 minutes

The abrasion test procedures are substantially the same as described before. The test data thus obtained are listed below in Table 3.

Table 3

| No. of Example | Ta removal rate (Å/min) |
|---|---|
| Example 4* | 352 |
| Example 5* | 502 |
| Example 6* | 471 |
| Example 7* | 1079 |
| Example 8 | 610 |
| Comparative Example 2 | 53 |

* not according to the invention

In view of the above examples, it is evident that the abrasive compositions according to the present invention can effectively enhance the polishing rate for metal films, and in particular W. Al and Ta films

As described before, according to another embodnnent of the present invention, the abrasive composition may further comprise an anionic surfactant to effectively reduce the viscosity of the abrasive composition. This embodiment will be illustrated by the following examples.

Example 9

2.4 Kg alumina particles as used in Example 1 was added to 30.9 Kg deionized water at room temperature. The mixture was agitated continuously with a stirrer having a high shear force until the alumina particles were completely suspended in the water and a slurry was formed. Thereafter, 3.2 Kg formic acid, 0.48 Kg Boemite (the trademark of an alumina commercialized by Condea Corporation), 1.6 Kg ammonium persulfate, and 0.03 Kg poly(ethylene glycol) (Aldrich Ar.20,240-1) were added in sequence to the slurry. The slurry was adjusted with $HNO_3$ or $NH_4OH$ to have a pH of about 3.8. The slurry was then filtered to obtain the chemical mechanical abrasive composition of the present invention. The results of the viscosity test of the resultant composition are listed below in Table 4.

Example 10

The preparation steps of Example 9 were repeated except that the poly(ethylene glycol) was replaced by 0.03 Kg BYK-022 (a polyalkylsiloxane). The slurry was then filtered to obtain the chemical mechanical abrasive composition of the present invention. The results of the viscosity test of the resultant composition are listed below in Table 4.

Examples 11

The preparation steps of Example 9 were repeated except that the poly(ethylene glycol) was replaced by 0.03 Kg Dispex GA40 (produced by Allied Colloids Corporation). The slurry was then filtered to obtain the chemical mechanical abrasive composition of the present invention. The results of the viscosity test of the

resultant composition are listed below in Table 4.

Comparative Example 3

The preparation steps of Example 9 were repeated except that no poly(ethylene glycol) was used. The results of the viscosity test of the resultant composition are listed below in Table 4.

Viscosity Test

One liter of each slurry of Examples 8-10 and Comparative Example 3 was tested by Brookfield Model LVF (No. 1. 60 rpm) for determining viscosity. The test results are shown below in Table 4.

Table 4

| No. of Example | Viscosity (cps) |
|---|---|
| Example 9* | 82.5 |
| Example 10* | 80 |
| Example 11* | 42.5 |
| Comparative Example 3 | 75 |

* not according to the invention

In view of the results shown in Table 4, it is known that the nonionic surfactants, such as polyalkylsiloxanes or polyoxyalkylene ethers, disclosed in US Pat. No. 5,476,606 cannot effectively reduce the viscosity of abrasive compositions. According to the present invention, the viscosity of abrasive compositions can be effectively reduced by incorporating an anionic surfactant.

It is further understood that the present invention is not limited to the particular embodiments shown and described herein, but that various changes and modifications may be made without departing from the scope of the invention.

## Claims

1. A composition for semiconductor processing comprising: (a) 70%-95% by weight of an aqueous medium; (b)1-25% by weight of an abrasive; and (c) 0.1-20% by weight of an abrasion accelerator; wherein the abrasion accelerator comprises an amido group-containing compound in combination with a nitrate salt.

2. The composition according to claim 1, wherein the abrasive is present in an amount of 3 to 10% by weight, and the abrasion accelerator is present in an amount of 1 to 6% by weight, based on the weight of the composition.

3. The composition according to claim 1 or 2, wherein the amido group-containing compound is one or more of formamide, acetamide, propionamide, N-methylformamide, N-methylacetamide, urea, methylurea, ethylurea, dimethylurea and diethylurea.

4. The composition according to any preceding claim, further comprising 1 to 15% by weight of an oxidant, based on the weight of the composition.

5. The composition according to claim 4, wherein the oxidant is present in an amount of 4 to 6% by weight.

6. The composition according to claim 4 or 5, wherein the oxidant is one or more of peroxides, chlorates, chlorites, perchlorates, bromates, bromites, perbromates and nitrites.

7. The composition according to any preceding claim, wherein the abrasive is one or more of $SiO_2$, $Al_2O_3$, $ZrO_2$, $CeO_2$, SiC, $Fe_2O_3$, $TiO_2$ and $Si_3N_4$.

8. A composition according to any preceding claim which additionally comprises 0.01 to 1% by weight of an anionic surfactant, based on the weight of the composition.

9. The composition according to claim 8, wherein said anionic surfactant is one or more of polycarboxylics, salts thereof, polyacrylic copolymers, and salts thereof.

10. The composition according to claim 8, comprising at least 70% by weight of said aqueous medium, 4-6% by weight of said abrasive, 2-4% by weight of said abrasion accelerator, 4-8% by weight of an oxidant, and 0.1-0.5% by weight of said anionic surfactant.

11. The composition according to any preceding claim, further comprising 0.05-0.2% by weight of benzotriazole and/or its derivatives.

## Patentansprüche

1. Zusammensetzung für Halbleiterverarbeitung umfassend:

   (a) 70 bis 95 Gew.-% eines wässrigen Mediums;
   (b) 1 bis 25 Gew.-% eines Schleifmittels; und
   (c) 0,1 bis 20 Gew.-% eines Schleifmittelbeschleunigers, wobei der Schleifmittelbeschleuniger eine Amidogruppe enthaltende Verbindung in Kombination mit einem Nitratsalz umfaßt.

2. Zusammensetzung nach Anspruch 1, wobei das

Schleifmittel in einer Menge von 3 bis 10 Gew.-% und der Schleifmittelbeschleuniger in einer Menge von 1 bis 6 Gew.-% bezogen auf das Gewicht der Zusammensetzung vorliegen.

**3.** Zusammensetzung nach Anspruch 1 oder 2, wobei die Amidogruppe enthaltende Verbindung eine oder mehrere aus Formamid, Acetamid, Propionamid, N-Methylformamid, N-Methylacetamid, Harnstoff, Methylharnstoff, Ethylharnstoff, Dimethylharnstoff und Diethylharnstoff ist.

**4.** Zusammensetzung nach einem der vorhergehenden Ansprüche, ferner umfassend 1 bis 15 Gew.-% eines Oxidationsmittels bezogen auf das Gewicht der Zusammensetzung.

**5.** Zusammensetzung nach Anspruch 4, wobei das Oxidationsmittel in einer Menge von 4 bis 6 Gew.-% vorliegt.

**6.** Zusammensetzung nach Anspruch 4 oder 5, wobei das Oxidationsmittel eines oder mehrere aus Peroxiden, Chloraten, Chloriten, Perchloraten, Bromaten, Bromiten, Perbromaten und Nitriten ist.

**7.** Zusammensetzung nach einem der vorhergehenden Ansprüche, wobei das Schleifmittel eines oder mehrere aus $SiO_2$, $Al_2O_3$, $ZrO_2$, $CeO_2$, SiC, $Fe_2O_3$, $TiO_2$ und $Si_3N_4$ ist.

**8.** Zusammensetzung nach einem der vorhergehenden Ansprüche, welche zusätzlich 0,01 bis 1 Gew.-% eines anionischen grenzflächenaktiven Stoffes bezogen auf das Gewicht der Zusammensetzung umfaßt.

**9.** Zusammensetzung nach Anspruch 8, wobei das anionische grenzflächenaktive Mittel eines oder mehrere aus Polycarbonsäuren, Salzen davon, Polyacrylcopolymeren, und Salzen davon ist.

**10.** Zusammensetzung nach Anspruch 8, umfassend mindestens 70 Gew.-% des wässrigen Mediums, 4 bis 6 Gew.-% des Schleifmittels, 2 bis 4 Gew.-% des Schleifmittelbeschleunigers, 4 bis 8 Gew.-% eines Oxidationsmittels, und 0,1 bis 0,5 Gew.-% des oberflächenaktiven Stoffes.

**11.** Zusammensetzung nach einem der vorhergehenden Ansprüche, ferner umfassend 0,05 bis 0,2 Gew.-% von Benzotriazol und/oder seinen Derivaten.

## Revendications

**1.** Composition pour le traitement de semi-conducteurs comprenant : (a) 70 %-95 % en poids d'un milieu aqueux ; (b) 1-25 % en poids d'un abrasif ; et (c) 0,1-20 % en poids d'un accélérateur d'abrasion ; dans laquelle l'accélérateur d'abrasion comprend un composé contenant un groupe amido conjointement avec un sel nitrate.

**2.** Composition selon la revendication 1, dans laquelle l'abrasif est présent en une quantité de 3 à 10 % en poids et l'accélérateur d'abrasion est présent en une quantité de 1 à 6 % en poids par rapport au poids de la composition.

**3.** Composition selon la revendication 1 ou 2, dans laquelle le composé contenant un groupe amido est un ou plusieurs de : formamide, acétamide, propionamide, N-méthylformamide, N-méthylacétamide, urée, méthylurée, éthylurée, diméthylurée et diéthylurée.

**4.** Composition selon l'une quelconque des revendications précédentes, comprenant en outre de 1 à 15 % en poids d'un oxydant par rapport au poids de la composition.

**5.** Composition selon la revendication 4, dans laquelle l'oxydant est présent en une quantité de 4 à 6 % en poids.

**6.** Composition selon la revendication 4 ou 5, dans laquelle l'oxydant est l'un ou plusieurs de : peroxydes, chlorates, chlorites, perchlorates, bromates, bromites, perbromates et nitrites.

**7.** Composition selon l'une quelconque des revendications précédentes, dans laquelle l'abrasif est l'un ou plusieurs de : $SiO_2$, $Al_2O_3$, $ZrO_2$, $CeO_2$, SiC, $Fe_2O_3$, $TiO_2$ et $Si_3N_4$.

**8.** Composition selon l'une quelconque des revendications précédentes, comprenant en outre de 0,01 à 1 % en poids d'un agent tensio-actif anionique par rapport au poids de la composition.

**9.** Composition selon la revendication 8, dans laquelle ledit agent tensio-actif anionique est l'un ou plusieurs de : composés polycarboxyliques, des sels de ceux-ci, copolymères polyacryliques et des sels de ceux-ci.

**10.** Composition selon la revendication 8, comprenant au moins 70 % en poids dudit milieu aqueux, 4-6 % en poids dudit abrasif, 2-4 % en poids dudit accélérateur d'abrasion, 4-8 % en poids d'un oxydant et 0,1-0,5 % en poids dudit agent tensio-actif anionique.

**11.** Composition selon l'une quelconque des revendications précédentes, comprenant en outre 0,05-0,2 % en poids de benzotriazole et/ou de ses dérivés.